# EUROPEAN PATENT APPLICATION

(11) **EP 4 616 995 A1**
(43) Date of publication of application: **17.09.2025**
(21) Application number: 23888660.0
(22) Date of filing: 06.11.2023
(51) Int. Cl.: B23Q 17/09, B23B 27/00, B23C 9/00, B23Q 17/00

(54) **PROCESSING DEVICE, PROCESSING METHOD, SYSTEM, AND COMPUTER PROGRAM**

(30) Priority: 07.11.2022 WO PCT/JP2022/041290
(71) Applicant: SUMITOMO ELECTRIC INDUSTRIES, LTD., Osaka-shi, Osaka 541-0041 (JP)
(72) Inventor: TOYOSHIMA, Akihiro, Osaka-shi, Osaka 541-0041 (JP); KOIKE, Yusuke, Osaka-shi, Osaka 541-0041 (JP)
(74) Representative: Boult Wade Tennant LLP
(86) International application number: PCT/JP2023/039905
(87) International publication number: WO 2024/101313

(57) **Abstract**

This processing device includes: a reception unit that receives, from a cutting tool, an output value from a sensor mounted on the cutting tool; a processing unit that calculates a physical quantity relating to the cutting tool from the output value received by the reception unit; and a display unit that displays an image including a graph representing time-series data pertaining to the physical quantity and a distribution image representing the distribution of the physical quantity.

## Description

### TECHNICAL FIELD

The present disclosure relates to a processing device, a processing method, a system, and a computer program. The present disclosure claims priority based on International Patent Application PCT/JP2022/041290 filed on November 7, 2022, the entire contents of which are incorporated herein by reference.

### BACKGROUND ART

Known cutting tools (that is, a milling tool and a turning tool) include sensors. For example, PTL 1 described below discloses a cutting tool including a sensor and a wireless communication unit. In this cutting tool, information on cutting tool measured by the sensor is transmitted to the outside by the wireless communication unit.

### CITATION LIST

### PATENT LITERATURE

PTL 1: Japanese Unexamined Patent Application Publication No. 2020-62746

### SUMMARY OF INVENTION

A processing device according to an aspect of the present disclosure includes a reception unit configured to receive from a cutting tool an output value of a sensor mounted on the cutting tool, a processing unit configured to calculate a physical quantity related to the cutting tool from the output value received by the reception unit, and a display unit configured to display an image including a graph representing time-series data of the physical quantity and a distribution image representing distribution of the physical quantity.

### BRIEF DESCRIPTION OF DRAWINGS

FIG. 1 is a schematic diagram illustrating a configuration of a system according to a first embodiment of the present disclosure.
FIG. 2 is a perspective view schematically illustrating a milling tool illustrated in FIG. 1.
FIG. 3 is a block diagram illustrating a configuration of a sensor module attached to the milling tool illustrated in FIG. 1.
FIG. 4 is a block diagram illustrating a configuration of a processing device illustrated in FIG. 1.
FIG. 5 illustrates an example of a display screen displayed in a display device.
FIG. 6 is a flowchart illustrating operation performed by the processing device illustrated in FIG. 1.
FIG. 7 illustrates an initial image displayed in the display device.
FIG. 8 is a schematic diagram illustrating a configuration of a system according to a second embodiment of the present disclosure.
FIG. 9 is a side view schematically illustrating a turning tool illustrated in FIG. 8.
FIG. 10 is a block diagram illustrating a configuration of a sensor module attached to the turning tool illustrated in FIG. 8.
FIG. 11 illustrates an example of a display screen displayed in the display device.
FIG. 12 is a flowchart illustrating operation performed by the processing device illustrated in FIG. 8.
FIG. 13 illustrates an initial image displayed in the display device.

### DETAILED DESCRIPTION

### [Problems to be Solved by Present Disclosure]

When the output value of the sensor obtained during cutting is analyzed, a load of cutting (that is, cutting resistance) applied to an edge of a cutting blade can be calculated, and a processing state can be evaluated. As a method of evaluating with respect to a cutting tool including one or more cutting blades, there is a method of checking a situation of the load on each blade in an arbitrary processing section (that is, an arbitrary duration in the entire duration of processing) or a method of checking a tendency of a load situation applied to each blade for the entirety of processing.

For example, when it is wanted to check data (for example, the physical quantity such as load on the milling tool) of an arbitrary processing section, it is required to check a specific section from a graph representing time-series data, and after that, create a distribution image (for example, an image formed by two-dimensionally plotting the component of the load on the milling tool) by using the data of the section. Furthermore, to adjust the processing section included in a single distribution image (that is, a section for identifying data used for generating a single distribution image), it is required to generate and check the distribution image on an as-needed basis. Also, when time variation of the distribution image generated from the data of the entirety of processing is displayed by animation (for example, graphics interchange format (GIF) animation), it is required to generate frame images (that is, distribution images) on an as-needed basis to check and adjust the reproduction speed. The above description is not only applicable to the case of the milling tool but also similarly applicable to the case of the turning tool. Furthermore, when cutting operations under the different processing conditions are compared, it is required to individually adjust the processing section and the reproduction speed included in a single image. As has been described, in order to visually grasp the state of the cutting tool from the physical quantity (for example, load) calculated from the output value of the sensor obtained during the cutting, complicated data processing is required.

Accordingly, an object of the present disclosure is to provide a processing device, a processing method, a system, and a computer program with which a state of a cutting tool on which a sensor is mounted can be easily grasped.

### [Advantageous Effects of Present Disclosure]

The present disclosure can provide a processing device, a processing method, a system, and a computer program with which the state of a cutting tool on which a sensor is mounted can be easily grasped.

### [Description of Embodiments of Present Disclosure]

The content of embodiments according to the present disclosure is listed and described. At least subsets of the embodiments to be described below may be arbitrarily combined with each other.

(1) A processing device according to a first aspect of the present disclosure includes a reception unit configured to receive from a cutting tool an output value of a sensor mounted on the cutting tool, a processing unit configured to calculate a physical quantity related to the cutting tool from the output value received by the reception unit, and a display unit configured to display an image including a graph representing time-series data of the physical quantity and a distribution image representing distribution of the physical quantity. When the graph and the distribution image are simultaneously displayed as described above, a state of the cutting tool on which the sensor is mounted can be easily grasped during cutting.
(2) In (1) described above, the sensor may be a strain sensor, the output value may be an output value of the sensor in cutting with the cutting tool, the processing unit may calculate cutting resistance from the output value as the physical quantity, the display unit may generate the distribution image by plotting, in a plane, two components of the cutting resistance calculated from the output value within a predetermined time, and the two components may be components of the cutting resistance in two respective axial directions which intersect each other in a plane perpendicular to a central axis of the cutting tool. Thus, the cutting resistance of the cutting tool on which the sensor is mounted can be easily grasped during cutting, and a fracture, wear, or the like of the cutting blades can be easily determined from the shape of the distribution figure.
(3) In (2) described above, the display unit may display, so as to be superposed on the graph, a figure having a width corresponding to the predetermined time, the processing device may further include an operation unit for inputting an instruction to the display unit, and, in response to variation of at least one of the width and a position of the figure in the graph by operating the operation unit, the display unit may generate the distribution image representing the distribution of the physical quantity superposed on the figure after the variation and display the distribution image. Thus, the distribution image suitable for grasping the state of the cutting tool on which the sensor is mounted can be generated, and the grasping of the state of the cutting tool on which the sensor is mounted is facilitated.
(4) In (3) described above, in response to input of an instruction to reproduce by using the operation unit, the display unit may refresh the distribution image while moving the figure along a time axis of the graph. Thus, the time variation of the physical quantity related to the cutting tool can be checked with animation of the distribution image. This can increase ease of grasping the state of the cutting tool on which the sensor is mounted.
(5) In (4) described above, a moving amount of the figure at a single movement may be specified by operating the operation unit. This allows generation of the animation of the distribution image suitable for grasping the state of the cutting tool on which the sensor is mounted.
(6) In (4) or (5) described above, a speed at which the distribution image is refreshed may be specified by operating the operation unit. This allows specification of a reproduction speed of the animation of the distribution image suitable for grasping the state of the cutting tool on which the sensor is mounted.
(7) A processing method according to a second aspect of the present disclosure includes receiving by a communication device from a cutting tool an output value of a sensor mounted on the cutting tool, calculating by a processing device a physical quantity related to the cutting tool from the output value received by the communication device, and displaying by a display device an image including a graph representing time-series data of the physical quantity and a distribution image representing distribution of the physical quantity. When the graph and the distribution image are simultaneously displayed as described above, the state of the cutting tool on which the sensor is mounted can be easily grasped.
(8) A computer program according to a third aspect of the present disclosure causes a computer to perform a reception function receiving from a cutting tool an output value of a sensor mounted on the cutting tool, a processing function calculating a physical quantity related to the cutting tool from the output value received by the reception function, and a displaying function displaying an image including a graph representing time-series data of the physical quantity and a distribution image representing distribution of the physical quantity. When the graph and the distribution image are simultaneously displayed as described above, the state of the cutting tool on which the sensor is mounted can be easily grasped.
(9) A system according to a fourth aspect of the present disclosure includes a sensor mounted on a cutting tool and the processing device according to any one of (1) to (6) described above. In this system, the cutting tool includes a communication unit configured to transmit an output value of the sensor to the processing device. Thus, the state of the cutting tool on which the sensor is mounted can be easily grasped.
(10) In any one of (4) to (6) described above, the cutting tool may be a milling tool, and the processing unit may adjust a refreshing speed of the distribution image based on a feed speed of the milling tool or a number of rotations of the milling tool per unit time and a sampling frequency of the output value. Thus, measurement results of two rotary cutting operations can be easily compared at identical timings.
(11) In (10) described above, the reception unit may receive an output value in a first rotary cutting in which the feed speed is a first speed and an output value in a second rotary cutting in which the feed speed is a second speed greater than the first speed, the processing unit may calculate the physical quantity from the output value in the first rotary cutting and the output value in the second rotary cutting, and the processing unit may increase the refreshing speed of the distribution image generated from the output value in the first rotary cutting or reduce the refreshing speed of the distribution image generated from the output value in the second rotary cutting. Thus, a processing state (that is, a state of the milling tool) can be easily compared at identical timings (for example, timings of cutting the same distance) when identical products are processed under sets of processing conditions of different feed speeds.
(12) In (10) described above, the reception unit may receive an output value in a first rotary cutting in which the number of rotations is a first number of rotations and the sampling frequency of the output value is a first frequency and an output value in a second rotary cutting in which the number of rotations is a second number of rotations and the sampling frequency of the output value is a second frequency. In this case, the processing unit may determine a first time as the predetermined time from the output value in the first rotary cutting and a second time as the predetermined time from the output value in the second rotary cutting. When the first time is greater than the second time, the refreshing speed of the distribution image generated from the output value in the first rotary cutting may be reduced or the refreshing speed of the distribution image generated from the output value in the second rotary cutting may be increased. Thus, a processing state (that is, a state of the milling tool) can be easily compared at identical timings (that is, timings at which the positions of the milling tool are identical) when identical products are processed under sets of processing conditions of different numbers of rotations for processing. Also, the processing state (that is, the state of the milling tool) can be easily compared at the identical timings even when the output values of the sensor are obtained at different sampling frequencies.
(13) In (12) described above, when the first number of rotations is S1, the first frequency is fs1, the first time is T1, and Z1 is a positive integer, the first time T1 may be calculated by T1 = (60/S1) × N1 by using a natural number N1 that satisfies Z1 = fs1 × (60/S1) × N1. When the second number of rotations is S2, the second frequency is fs2, the second time is T2, and Z2 is a positive integer, the second time T2 may be calculated by T2 = (60/S2) × N2 by using a natural number N2 that satisfies Z2 = fs2 × (60/S2) × N2. This allows adequate determination of the predetermined time for comparing the processing state (that is, the state of the milling tool) under a set of processing conditions of different numbers of rotations for processing or for comparing the processing state when the output value of the sensor is obtained at different sampling frequencies.
(14) In (13) described above, the first time T1 calculated by T1 = (60/S1) × N1 may be varied to an upper limit value Tl1 in a case where the first time T1 is greater than the predetermined upper limit value Tl1 and may be varied to a lower limit value Ts1 in a case where the first time T1 is smaller than the predetermined lower limit value Ts1. The second time T2 calculated by T2 = (60/S2) × N2 may be varied to an upper limit value Tl2 in a case where the second time T2 is greater than the predetermined upper limit value Tl2 and may be varied to a lower limit value Ts2 in a case where the second time T2 is smaller than the predetermined lower limit value Ts2. This allows avoidance of the inability of noticing local changes caused by an excessively great predetermined time, that is, an excessively large moving distance of the milling tool and avoidance of an increase in a data amount of entire animation.
(15) A processing method according to a fifth aspect of the present disclosure includes receiving by a communication device from a milling tool an output value of a sensor mounted on the milling tool, calculating by a processing device a physical quantity related to the milling tool from the output value received by the communication device, and displaying by a display device an image including a graph representing time-series data of the physical quantity and a distribution image representing distribution of the physical quantity. When the graph and the distribution image are simultaneously displayed as described above, a state of the milling tool on which the sensor is mounted can be easily grasped.
(16) A computer program according to a sixth aspect of the present disclosure causes a computer to perform a reception function receiving from a milling tool an output value of a sensor mounted on the milling tool, a processing function calculating a physical quantity related to the milling tool from the output value received by the reception function, and a displaying function displaying an image including a graph representing time-series data of the physical quantity and a distribution image representing distribution of the physical quantity. When the graph and the distribution image are simultaneously displayed as described above, the state of the milling tool on which the sensor is mounted can be easily grasped.
(17) A system according to a seventh aspect of the present disclosure includes a sensor mounted on a milling tool and the processing device according to any one of (10) to (14) described above. In this system, the milling tool includes a communication unit configured to transmit an output value of the sensor to the processing device. Thus, the state of the milling tool on which the sensor is mounted can be easily grasped.

### [Details of Embodiments of Present Disclosure]

In the embodiments to be described below, the same reference numerals are assigned to the same components. The names and functions of the components of the same reference numerals are the same. Accordingly, the detailed description of the components of the same reference numerals are not repeated.

### <First Embodiment>

### [General Configuration]

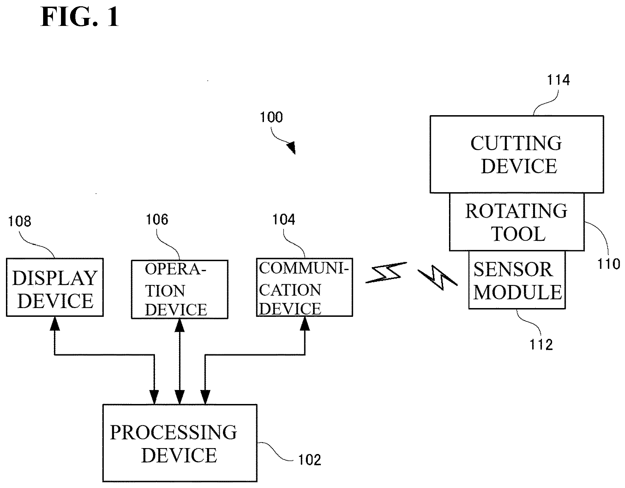

Referring to FIG. 1, a system 100 according to a first embodiment of the present disclosure includes a processing device 102, a communication device 104, an operation device 106, a display device 108, and a sensor module 112. The processing device 102 is realized by, for example, a computer. The communication device 104 has a wireless function and is configured to receive data transmitted from the sensor module 112 mounted on a milling tool 110. The communication device 104 functions as a reception unit for the processing device 102. The milling tool 110 is mounted on a cutting device 114 and used for a rotary cutting process performed on a processing object. A processing state of the milling tool 110 is reflected in a measured value obtained with the sensor module 112 (that is, an output value of a sensor). The communication device 104 is configured to output the received output value of the sensor to the processing device 102. The operation device 106 is configured to input an instruction to the processing device 102. The operation device 106 includes, for example, a keyboard, a mouse, a touch panel, and the like for a computer. The display device 108 is an image display device such as a liquid crystal display device. The display device 108 functions as a display unit for the processing device 102. As will be described later, the processing device 102 is configured to store and analyze the output value input from the communication device 104 and, by following the instruction through the operation device 106, display a physical quantity calculated from the output value and a distribution image of the physical quantity in the display device 108.

### Although FIG. 1 illustrates a configuration in which the communication device 104, the operation device 106, and the display device 108 are disposed outside the processing device 102, a subset or the entirety of these devices may be included in the processing device 102. For example, a touch panel display may be used for the operation device 106 and the display device 108 and included in the processing device 102.

### [Configuration of Milling tool]

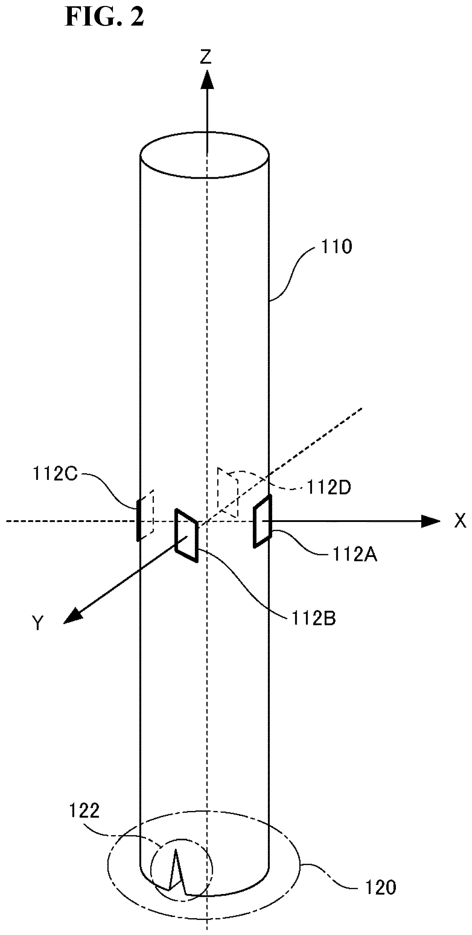

Referring to FIG. 2, the milling tool 110 includes a cutting portion 120 at an end portion thereof. A cutting blade 122 is disposed in the cutting portion 120. The cutting blade 122 is configured to be brought into contact with a cutting object so as to cut the cutting object. Although a single cutting blade 122 is illustrated in FIG. 2, a plurality of (for example, four) cutting blades 122 may be disposed. The cutting blade 122 may be removably secured to the cutting portion 120. A sensor module 112A, a sensor module 112B, a sensor module 112C, and a sensor module 112D are disposed on a side surface of the milling tool 110. Out of the sensor module 112A, the sensor module 112B, the sensor module 112C, and the sensor module 112D, intervals between the modules adjacent to each other in a rotating direction about a rotation axis (that is, a central axis) of the milling tool 110 are 90 degrees. It is assumed that the sensor module 112A, the sensor module 112B, the sensor module 112C, and the sensor module 112D include sensors of the same type and have the same configuration. Accordingly, when the sensor modules 112A to 112D are not distinguished from each other, the sensor modules 112A to 112D may be referred to as the sensor module 112. FIG. 2 illustrates the X, Y, and Z axes that are perpendicular to each other and set for the milling tool 110. The rotation axis of the milling tool 110 is the Z axis, and the X axis is set in a direction extending from the rotation axis toward the outside of the milling tool 110 through the sensor module 112A (specifically, the sensor). The Y axis is set in a direction extending from the rotation axis toward the outside of the milling tool 110 through the sensor module 112B (specifically, the sensor). It is sufficient that the sensors respectively included in the sensor module 112A, the sensor module 112B, the sensor module 112C, and the sensor module 112D be disposed on the side surface of the milling tool 110. Portions of the sensor modules except for the sensors may be contained in a cylindrical housing (not illustrated) disposed around the milling tool 110.

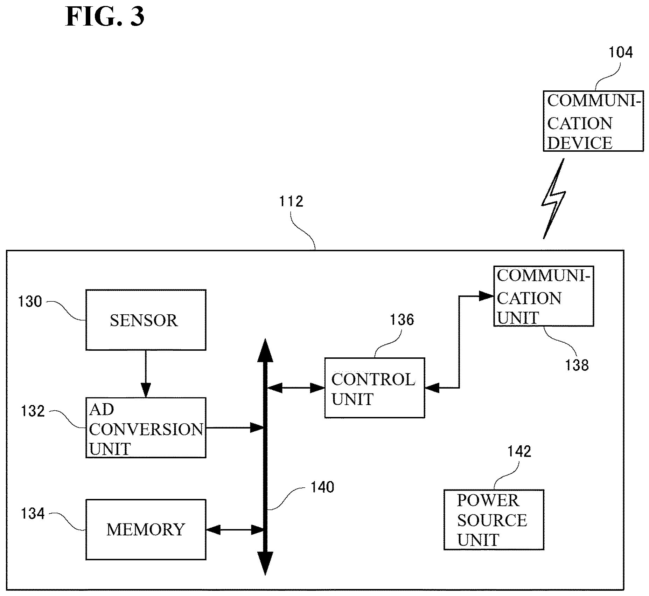

Referring to FIG. 3, the sensor module 112 includes a sensor 130, an analog-to-digital (AD) conversion unit 132, a memory 134, a control unit 136, a communication unit 138, a bus 140, and a power source unit 142. The sensor 130 is disposed at a position corresponding to any one of the sensor modules 112A, 112B, 112C, 112D illustrated in FIG. 2. Here, the sensor 130 is a strain sensor. The sensor 130 may be a sensor other than the strain sensor. For example, the sensor 130 may be an acceleration sensor. The AD conversion unit 132 is configured to convert an analog signal to be input thereto into a digital signal and outputs the digital signal. That is, the AD conversion unit 132 samples the analog signal output from the sensor 130 (that is, the output value) at a predetermined sampling frequency to generate the digital signal. The output value being the generated digital signal is sent to the memory 134 via the bus 140. The memory 134 is, for example, a rewritable nonvolatile semiconductor memory and stores data sent via the bus 140. The memory 134 also stores a computer program to be executed by the control unit 136 (hereinafter, simply referred to as a program).

The control unit 136 includes a central processing unit (CPU). The control unit 136 is configured to read the output value stored in the memory 134 and output the read output value to the communication unit 138. The communication unit 138 transmits the data to be input thereto to the outside of the sensor module 112, that is, the communication device 104. The communication unit 138 preforms a wireless communication function, for example, Wi-Fi (a registered trademark). Specifically, the communication unit 138 generates a communication packet including data input from the control unit 136, an address of the communication device 104 as a destination address, an address of the communication unit 138 as a source address and transmits the generated communication packet. Thus, the communication packet transmitted from the communication unit 138 is received by the communication device 104. The bus 140 is configured to allow data mutually exchanged between the AD conversion unit 132, the memory 134, and the control unit 136 to be sent therethrough. The power source unit 142 is configured to supply electric power required for the units included in the sensor module 112 to function. The power source unit 142 is, for example, a battery.

In the above description, a single sensor module includes a single sensor. However, this is not limiting. A single sensor module may include a plurality of sensor modules. For example, a single sensor module 112 may include four sensors disposed at positions respectively corresponding to the sensor modules 112A, 112B, 112C, 112D illustrated in FIG. 2. In this case, the sensor module 112 includes a total of four AD conversion units 132 which correspond to four sensors 130, respectively. Each AD conversion unit 132 samples the output value of a corresponding one of the sensors 130 to generate a digital output value and stores the digital output value in the memory 134 as time-series data. When the control unit 136 transmits output values to the communication device 104 via the communication unit 138, each output value is transmitted so that the processing device 102 can identify which of the sensors has output the output value. For example, when an output value is transmitted, the control unit 136 may assign information identifying the sensor that has output this output value to this output value and transmits this output value with the information.

### [Configuration of Processing Device]

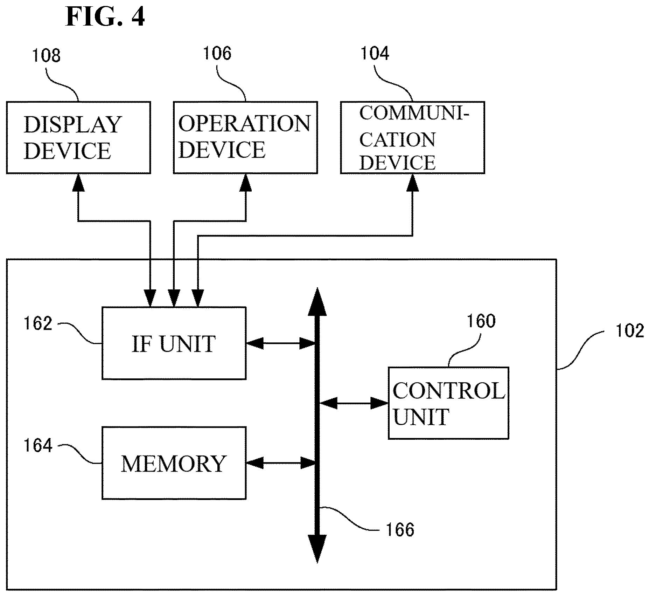

Referring to FIG. 4, the processing device 102 includes a control unit 160, an interface (IF) unit 162, memory 164, and a bus 166. The control unit 160 includes a CPU. The memory 164 is, for example, a rewritable nonvolatile semiconductor memory and stores a program executed by the control unit 160. Alternatively, the memory 164 may be a hard disk drive (HDD). The memory 164 provides a work region for the program executed by the control unit 160.

The IF unit 162 is an interface for allowing exchange of data with each of the communication device 104, the operation device 106, and the display device 108. The IF unit 162 is configured to send the data sent from the communication device 104 (that is, the output value of the sensor) to the memory 164 via the bus 166 so that the memory 164 stores the sent data. The IF unit 162 sends to the control unit 160 via the bus 166 the instruction input when the operation device 106 is operated. Thus, the control unit 160 executes processes, which will be described later, and stores a result of the processing in the memory 164. Part of the memory 164 functions as a video memory that stores video data corresponding to an image displayed in the display device 108. The IF unit 162 sends data of the video memory of the memory 164 to the display device 108 so as to allow the data to be displayed as an image in the display device 108. The memory 164 also stores information on the milling tool 110 and the processing conditions (for example, rotation speed, feeding speed, and the like) for the cutting (that is, rotary cutting). The information on the milling tool 110 includes information such as the shape, the dimensions, the material (for example, a Poisson's ratio), the number of the cutting blades, the positions of the cutting blades, and the positions where the sensor modules 112A, 112B, 112C, 112D are disposed.

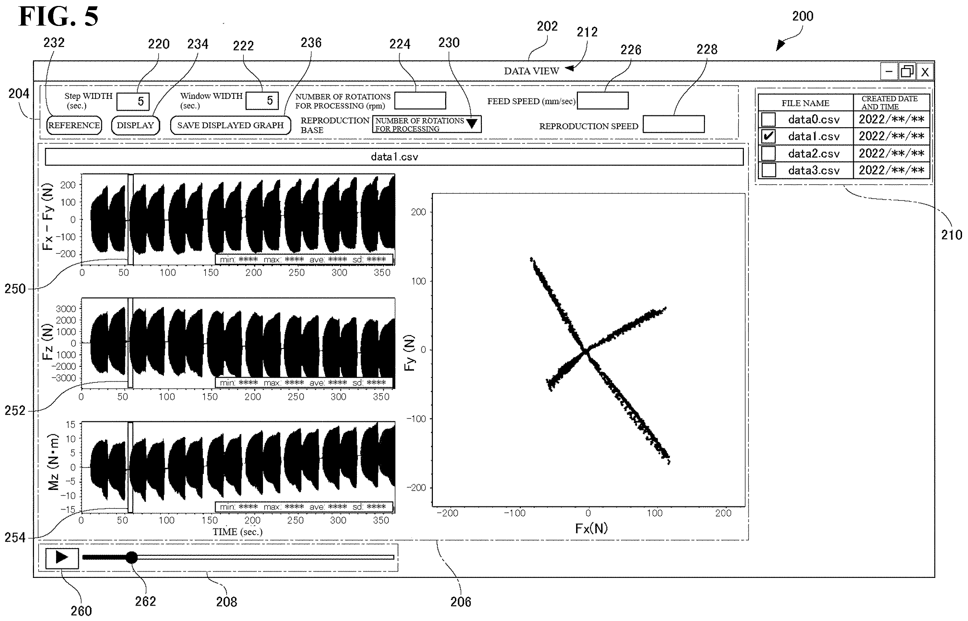

The control unit 160 reads the output value (that is, the strain value) of each of the sensor modules 112A, 112B, 112C, 112D stored in the memory 164 and calculates a moment and a load on the milling tool 110 (that is, cutting resistance) from the shape and the material (for example, the Poisson's ratio) of the milling tool 110 and the position where a corresponding one of the sensor modules 112A, 112B, 112C, 112D is disposed. The control unit 160 stores the components (the X component, the Y component, and the Z component) of the calculated load in the memory 164 as the time-series data. The control unit 160 also stores the moment in the memory 164 as the time-series data. When an instruction is input due to the operation of the operation device 106, the control unit 160 reads the calculated results from the memory 164 and causes the display device 108 to display the calculated results as illustrated in FIG. 5.

### [Screen Display]

Referring to FIG. 5, a display screen 200 includes a region 202, a region 204, a region 206, a region 208, and a region 210. The region 202 includes a title 212 representing a program that displays the screen and operation buttons for the entire display screen 200 represented at right end. Buttons to change display forms of the display screen 200 (that is, an icon display, a window display, and a full screen display) and a button to close the display screen 200 (that is, an exit button) are displayed in a right end portion of the region 202.

The calculated physical quantity related to the milling tool, that is, the X, Y, and Z components of the load (each represented by Fx, Fy, and Fz) and graphs representing the time-series data of the Z component of torque M (represented by Mz) are represented in a left region of the region 206. In each of the graphs, the horizontal axis represents time (seconds). That is, in an upper graph, the Fx component and the Fy component are superposed on each other. An intermediate graph represents the Z component Fz, and a lower graph represents the Z component Mz of torque. In the upper and intermediate graphs, the unit along the vertical axis is newtons (N), and in the lower graph the unit along the vertical axis is newton·meters (N·m). Items min, max, ave, and sd represented in a frame at the lower right of each graph respectively indicate a maximum value, a minimum value, an average value, and a standard deviation of each value of the physical quantity in a predetermined range of each of the graphs (that is, a Window 250, a Window 252, or a Window 254).

A right region of the region 206 displays the distribution image related to data in the Window 250 represented in the upper graph, that is, the distribution image in which a plurality of pieces of the data in the Window 250 are plotted with the horizontal axis representing Fx and the vertical axis representing Fy. As will be described later, the width of the Window 250 (a timewise width, and hereinafter, also referred to as a sectional width) is variable, and the data in the Window 250 varies in accordance with the variation of the width of the Window 250. Thus, a new distribution image is generated and displayed in the display screen 200 in accordance with the variation of the data. Furthermore, the Window 250 is movable in the time axis direction by operating the operation device 106. Also, when the Window 250 is moved, the data in the Window 250 varies. Thus, a new distribution image is generated and displayed in the display screen 200 in accordance with the variation of the data. The shape of the Window 250 is not limited to a rectangular shape. It is sufficient that the Window 250 be visual information (that is, figures, colors, or the like) to represent the data used to generate the distribution image.

The region 204 includes a cell 220, a cell 222, a cell 224, a cell 226, a cell 228, a mode selection button 230, a reference button 232, a display button 234, and a save displayed graph button 236. The cell 220 is provided to set the amount (in seconds) by which the Step width, that is, the Window 250 is moved. The cell 222 is provided to set the Window width, that is, the width (in seconds) of the Window 250. The Window 250 moves in accordance with a value set in the cell 220 (for example, T0 (seconds)), and as described above, a single distribution image is generated and displayed by using the data in the Window 250. Accordingly, the speed at which the distribution image is generated (that is, the speed at which the distribution image displayed in the region 206 is refreshed) is 1/T0 (the number of images/second). The cell 224 is provided to display or set the number of rotations for processing of the milling tool 110 (the number of rotations of the milling tool 110 per unit time, the unit is rpm). The cell 226 is provided to display or set the feed speed of the milling tool (the unit is mm/sec). The conditions of the rotary cutting from which the original data (that is, the output value of the sensor) for calculation of the data displayed in the region 206 (that is, the physical quantity) is obtained are set or displayed in the cell 224 and the cell 226. For example, the processing conditions are input to the cutting device 114, and accordingly, the processing device 102 can obtain the conditions of the rotary cutting from the cutting device 114 and store the obtained conditions in the memory 164. In this case, the control unit 160 reads the processing conditions and displays the read processing conditions in the cell 224 and the cell 226. When the conditions of the rotary cutting are not stored in the memory 164 of the processing device 102, the conditions are set in the cell 224 and the cell 226 by operation of the operation device 106.

A reproduction speed of animation (that is, the speed at which the distribution image is refreshed) is set or displayed in the cell 228. Each frame of the animation corresponds to a single distribution image. Accordingly, the animation reproduction speed can be calculated by 1/T0 (fps) as described above. The animation reproduction speed can be varied (that is, adjusted) as will be described later. A reproduction criteria of animation is selected with the mode selection button 230. When the mode selection button 230 is operated, a pull-down menu including a plurality of candidates is displayed so as to allow selection from the plurality of candidates. Examples of the candidates included in the pull-down menu include, for example, the "NUMBER OF ROTATIONS FOR PROCESSING", the "FEED SPEED", and "MANUAL". When the number of rotations for processing is selected (hereinafter, referred to as a number of rotations base), as will be described later, the reproduction speed is automatically (that is, by the control unit 160) determined (that is, adjusted) based on the number of rotations for processing in the cell 224 and displayed in the cell 228. When the feed speed is selected (hereinafter, referred to as a feed speed base), the reproduction speed is automatically determined (that is, determined by the control unit 160) based on the feed speed in the cell 226 and displayed in the cell 228. These cases in which the reproduction speed is automatically determined (that is, adjusted) are referred to as an automatic mode. In contrast, when the manual is selected (that is, in a manual mode), the operation device 106 is operated to set the reproduction speed in the cell 228. FIG. 5 illustrates a state in which the number of rotations for processing is selected as the reproduction criteria.

The reference button 232 is used for reading the data to be displayed in the region 206. When the reference button 232 is operated, a list including file names of reading candidates is displayed in the region 210. The display button 234 is provided for instructing to read the data in a file selected in the list displayed in the region 210 and display the data in the region 206. The save displayed graph button 236 is provided for instructing to save the graph displayed in the region 206. When the save displayed graph button 236 is operated, a screen (for example, a dialog box) for designating the name of a file to be saved and a saving location are displayed.

When the reference button 232 is operated as described above, the list of the file names including the data to be displayed in the region 206 is displayed in the region 210. FIG. 5 illustrates the following state: four files "data0.csv" to "data3.csv" are displayed in the list in the region 210; out of these files, the "data1.csv" is selected; the display button 234 is operated; and the data of the data1.csv is displayed in the region 206.

The region 208 includes a reproduction button 260 and a reproduction cursor 262. The reproduction button 260 starts animation display of the distribution image displayed in the region 206. The reproduction cursor 262 indicates the current reproduction position in a total reproduction time of the animation. The Window 250 represented in the region 206 moves in accordance with the reproduction of the animation of the distribution image. That is, the Window 250 is displayed at a position including the data used to generate the displayed distribution image in the upper graph. Also, in the intermediate and lower graphs, figures similar to the figure of the Window 250 (that is, Window 252 and Window 254) are displayed at positions corresponding to the same timings as that of the Window 250.

When a graph representing time variation of the physical quantity related to the milling tool and a distribution image of the physical quantity are simultaneously displayed as described above, the state of the milling tool on which the sensor is mounted can be easily grasped during rotary cutting.

When an image in which the X component Fx and the Y component Fy of the load (that is, cutting resistance) are plotted is displayed as the distribution image, the cutting resistance of the milling tool on which the sensor is mounted can be easily grasped during rotary cutting, and a fracture, wear, or the like of the cutting blades can be easily determined from the shape of the distribution figure. For example, when a fracture or wear occurs in one particular cutting blade out of four cutting blades, the length cut by the particular cutting blade is reduced, and accordingly, the length of a line segment of a cross shape corresponding to the particular cutting blade out of four line segments included in the cross shape is reduced.

In the above description, the X component Fx and the Y component Fy of the load (that is, cutting resistance) are plotted in the distribution image. However, this is not limiting. For example, in the distribution image, the Z component Fz and X component Fx or the Y component Fy may be plotted. It is sufficient that, in the distribution image, two components of the physical quantity related to the milling tool represented by the vector be plotted.

As described above, the width of the Window 250 can be set with the cell 222, and the Window 250 can be moved along the time axis. Thus, the distribution image adequate for grasping the state of the milling tool on which the sensor is mounted can be generated, and the grasping of the state of the milling tool on which the sensor is mounted is facilitated.

As described above, when the reproduction button 260 is operated, the distribution image representing the distribution of the physical quantity calculated by the control unit 160 is refreshed while the Window 250 is moved along the time axis of the graph. Thus, the time variation of the physical quantity related to the milling tool can be checked with animation of the distribution image. This can increase ease of grasping the state of the milling tool on which the sensor is mounted.

As described above, the moving amount of the Window 250 at a time can be designated with the cell 220. This allows generation of the animation of the distribution image suitable for grasping the state of the milling tool on which the sensor is mounted.

As described above, with the cell 228, the reproduction speed of the animation, that is, the speed at which the distribution image is refreshed can be designated. This allows generation of the animation of the distribution image suitable for grasping the state of the milling tool on which the sensor is mounted.

### [Automatic Adjustment of Reproduction Speed]

Hereinafter, a method of automatically setting the reproduction speed is described. When processing conditions adequate for the rotary cutting are obtained, rotary cutting is performed on the same objects (for example, a plurality of the same products) under different processing conditions, and the results are compared. That is, the state of the rotary cutting is compared by comparing the physical quantity calculated from the output values of the sensor obtained by the rotary cutting under the different processing conditions.

### <In the Case of Feed Speed Base>

When the feed speed of the milling tool is different (other conditions are the same), comparison at the same timings in rotary cutting (for example, timing of cutting the same distance) is difficult due to the difference in feed speed even in the case where the distribution image of the physical quantity is displayed in the animation as illustrated in FIG. 5. For example, it is assumed that feed speeds of two sets of the processing conditions are a first feed speed and a second feed speed, and the second feed speed is greater than the first feed speed (that is, the second feed speed > the first feed speed). In this case, the difference in timing due to the difference in feed speed is adjusted by, for example, increasing the reproduction speed of the animation of the distribution image of the physical quantity calculated from the output value of the sensor obtained by performing the rotary cutting at the first feed speed. The difference in timing due to the difference in feed speed can also be adjusted by reducing the reproduction speed of the animation of the distribution image of the physical quantity calculated from the output value of the sensor obtained by performing the rotary cutting at the second feed speed. Thus, the processing state (that is, the state of the milling tool) can be easily compared at the same timings (for example, timings of cutting the same distance) when the same products are processed under sets of the processing conditions of different feed speeds. Since the reproduction speed of the animation can be calculated by 1/T0 (fps) as described above, T0, that is the Step width is adjusted.

### <In the Case of Rotation Speed Base>

When the numbers of rotations of two sets of the processing conditions are different (other conditions are the same), it is required that the graph representing the time variation of the physical quantity and the distribution image of the physical quantity be simultaneously displayed as illustrated in FIG. 5, and the reproduction speed of the animation influenced by the number of rotations be adjusted in displaying the distribution image in animation. The reproduction speed of the animation of the distribution image is influenced by the sampling frequency. Thus, the reproduction speed is required to be adjusted also when the sampling frequencies are different.

As will be described later, an optimum sectional width (that is, the width of the Window 250 illustrated in FIG. 5) is calculated for an arbitrary number of rotations and an arbitrary sampling frequency, and the reproduction speed of the animation corresponding to a greater sectional width is reduced. Alternatively, the reproduction speed of the animation corresponding to a smaller sectional width may be increased. Since the reproduction speed of the animation can be calculated by 1/T0 (fps) as described above, T0, that is the Step width is adjusted.

### (Calculation of Sectional Width)

The number of rotations of the milling tool is defined as S (rpm), the sampling frequency is defined as fs (Hz), and a sectional width T (sec) is set so as to allow extraction (that is, generation) of a single frame of the animation image in every rotation through which the position of the milling tool that is rotating returns to the position at the time of the start of the rotation (hereinafter, referred to as an initial position). Specifically, the sectional width T is determined as follows: T = (60/S) × N. When Z is a positive integer, N is a natural number that satisfies Z = fs × (60/S) × N. The time required for the milling tool to perform a single rotation is represented by 60/S. Accordingly, fs × (60/S) represents the number of samples (that is, the number of pieces of data) during a single rotation of the milling tool, that is, the number of output values of the sensors obtained during a single rotation of the milling tool. Accordingly, when a number of samples Z obtained during N rotations of the milling tool from the initial position is an integer value, the sampling is performed at timing at which the position of the milling tool returns to the initial position. When the sectional width T is determined as described above, a single frame of the animation image is generated at every time the position of the milling tool returns to the initial position. However, a plurality of candidates of N exist only under the above-described conditions. Thus, an adequate T is determined under the following constraint condition.

That is, when the sectional width T is excessively small, the number of frames increases, and the entire size of the animation (that is, the amount of data) increases. Thus, a lower limit value Ts is set for the sectional width T, and when T > Ts, T is varied so as to satisfy T = Ts. That is, a value T calculated by T = (60/S) × N is varied to Ts. Thus, the excessive increase of the entire amount of data of the animation can be avoided. Here, the lower limit value Ts is an arbitrary value and may be determined in advance from the capacity of the memory 164 of the processing device 102.

In contrast, when the sectional width T is excessively large, the moving distance of the milling tool in the section becomes excessively large. This leads to inability of noticing local changes. That is, a single distribution image in which the local changes have been buried is generated. Thus, even when the distribution image is reproduced as animation, the local changes cannot be determined. Accordingly, an upper limit value Tl is set, and when T > Tl, T is varied so as to satisfy T = Tl. That is, a value T calculated by T = (60/S) × N is varied to Tl. This allows avoidance of the inability of noticing local changes caused by an excessively great predetermined time, that is, an excessively large moving distance of the milling tool. The product of the feed speed and Tl is a moving amount D of the milling tool. Thus, the upper limit value Tl may be set so that the moving amount D becomes the value with which the local changes can be determined.

Accordingly, when Ts ≤ T ≤ Tl is satisfied with T = (60/S) × N, the calculated value T is not varied. As described above, the sectional width T is determined and the reproduction speed is adjusted related to two determined sectional widths T as described above related to the time-series data of the physical quantity calculated from the time-series data of the output value of the sensor for which at least one of the number of rotations and the sampling frequency being the processing conditions is different. That is, the reproduction speed of the animation corresponding to a greater sectional width is reduced, or the reproduction speed of the animation corresponding to a smaller sectional width is increased. Thus, the processing state (that is, the state of the milling tool) can be easily compared at the same timings (that is, timings at which the positions of the milling tool are the same) when the same products are processed under sets of the processing conditions of different numbers of rotations for processing. Also, the processing state (that is, the state of the milling tool) can be easily compared at the same timings even when the same products are processed under sets of the processing conditions of the same numbers of rotations for processing and the output values of the sensor are obtained at different sampling frequencies.

As described above, when the reproduction criteria is set to the automation mode, the refreshing speed of the distribution image is adjusted based on the feed speed of the milling tool 110 or the number of rotations for processing (that is, the number of rotations of the milling tool per unit time) of the milling tool 110 and the sampling frequency of the output value. Thus, measurement results of two rotary cutting operations can be easily compared at the same timings.

### [Operation of Processing Device]

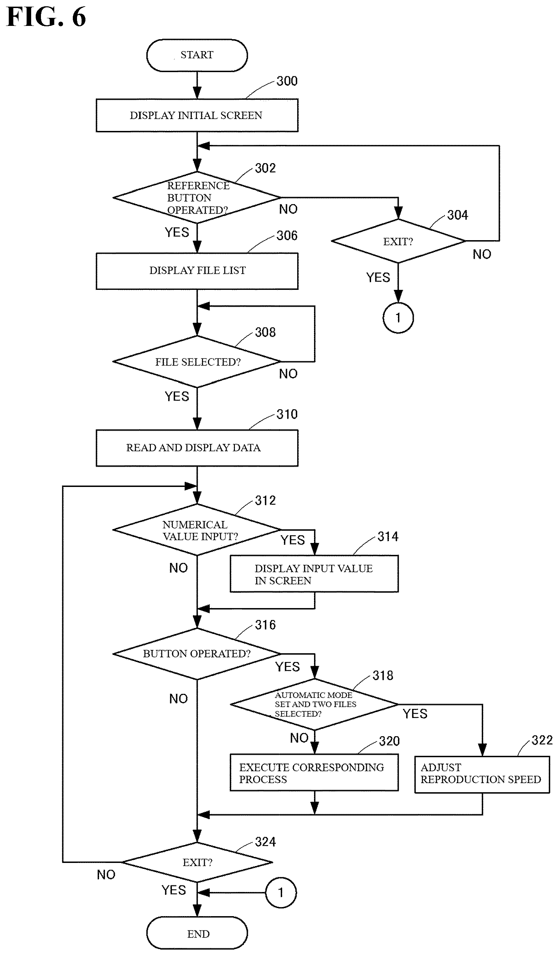

Referring to FIG. 6, operation of the processing device 102 is described.
Processes illustrated in FIG. 6 are realized when, in response to input of the instruction to the processing device 102 due to operation of the operation device 106, the control unit 160 (see FIG. 4) reads a predetermined program from the memory 164 and executes the program. It is assumed that the physical quantity of the milling tool 110 is calculated by the control unit 160 from the output value of the sensor obtained by rotary cutting using the milling tool 110 performed by the cutting device 114, and stored in the memory 164 as the time-series data.

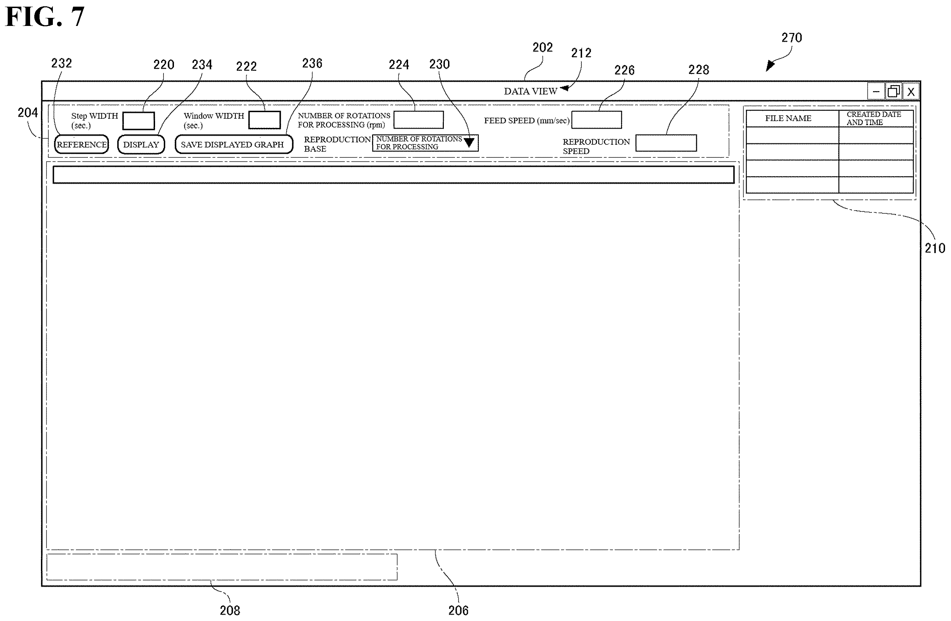

In step 300, the control unit 160 displays an initial screen in the display device 108. Specifically, the image data of the initial screen stored in the memory 164 is copied to a region used as a video memory of the memory 164. Thus, a display screen 270 being the initial screen illustrated in, for example, FIG. 7 is displayed in the display device 108. The display screen 270 corresponds to an image in a state before the reference button 232 is operated in the display screen 200 illustrated in FIG. 5.

In step 302, the control unit 160 determines whether the reference button 232 illustrated in FIG. 7 is operated. When it is determined that the reference button 232 is operated, control moves to step 306. When it is determined that the reference button 232 is not operated, the control moves to step 304.

In step 304, the control unit 160 determines whether an instruction to exit is received. When it is determined that the instruction to exit is received, the present program is exited. When it is determined that the instruction to exit is not received, the control returns to step 302. The instruction to exit is made by, for example, operating the exit button at the right end of the region 202 illustrated in FIG. 7.

When the operation button is operated, the control unit 160 displays the file list in the region 210 illustrated in FIG. 7 in step 306. After that, the control moves to step 308. The file list is displayed in the region 210 as illustrated in, for example, FIG. 5.

In step 308, the control unit 160 determines whether a file is selected from the file list displayed in the region 210. When it is determined that a file is selected, the control moves to step 310. When it is determined that a file is not selected, the process in step 308 is repeatedly performed. The number of files selected from the file list displayed in the region 210 is not limited to one. A plurality of files may be selected from the displayed file list.

In step 310, the control unit 160 reads the data of the file selected in step 308 from the memory 164 and displays the read data in the display device 108. After that, the control moves to step 312. As a result, as illustrated in, for example, FIG. 5, graphs of the time-series data and the distribution image are displayed in the region 206. The distribution image is generated by using, for example, the data in the Window for which the position and the Window width are set in the initial setting. When a plurality of files are selected, pieces of data of the files may be arranged in parallel.

In step 312, the control unit 160 determines whether a numerical value is input. Specifically, the control unit 160 determines whether one of the cells 220, 222, 224, 226, 228 is selected and a numerical value is input by operating the operation device 106. When it is determined that a numerical value is input, the control moves to step 314. When it is determined that a numerical value is not input, the control moves to step 316. It is assumed that the "MANUAL" is set in the reproduction criteria in the initial setting. Furthermore, as described above, when the processing conditions (that is, the number of rotations and the feed speed) of the data included in the file having been read in step 310 are stored in the memory 164, the control unit 160 reads the processing conditions and displays the processing conditions in the cell 224 and the cell 226.

In step 314, the control unit 160 displays the input value detected in step 312 in the corresponding cell. After that, the control moves to step 316.

In step 316, the control unit 160 determines whether a button is operated. Specifically, the control unit 160 determines whether any one of the mode selection button 230, the reference button 232, the display button 234, the save displayed graph button 236, and the reproduction button 260 is operated. When it is determined that any one of these buttons is operated, the control moves to step 318. When it is determined that none of the buttons is operated, the control moves to step 320.

In step 318, the control unit 160 determines whether the automatic mode is set as the reproduction criteria and two files are selected in step 308. When it is determined that the automatic mode is set and two files are selected, the control moves to step 322. When it is determined that the automatic mode is not set, two files are not selected, or the automatic mode is not set and two files are not selected, the control moves to step 320.

In step 320, the control unit 160 executes the process as described above corresponding to the button that is determined to have been operated in step 316. After that, the control moves to step 324.

When the automatic mode is set and two files are selected, the control unit 160 adjusts the reproduction speed of the animation of the distribution image in step 322. After that, the control moves to step 324. Specifically, as described above, the control unit 160 adjusts the reproduction speed of the animation of the distribution image generated from two pieces of time-series data corresponding to whether the reproduction criteria is the feed speed base or the number of rotations base.

In step 324, the control unit 160 determines whether the instruction to exit is received as in step 304. When it is determined that the instruction to exit is received, the present program is exited. When it is determined that the instruction to exit is not received, the control returns to step 312.

Thus, in response to the operation with the operation device 106, the control unit 160 displays the display screen 200 as illustrated in FIG. 5 in the display device 108 and executes the process corresponding to the operation. Accordingly, by displaying the graph and the distribution image simultaneously, the state of the milling tool on which the sensor is mounted can be easily grasped during rotary cutting.

### <Second Embodiment>

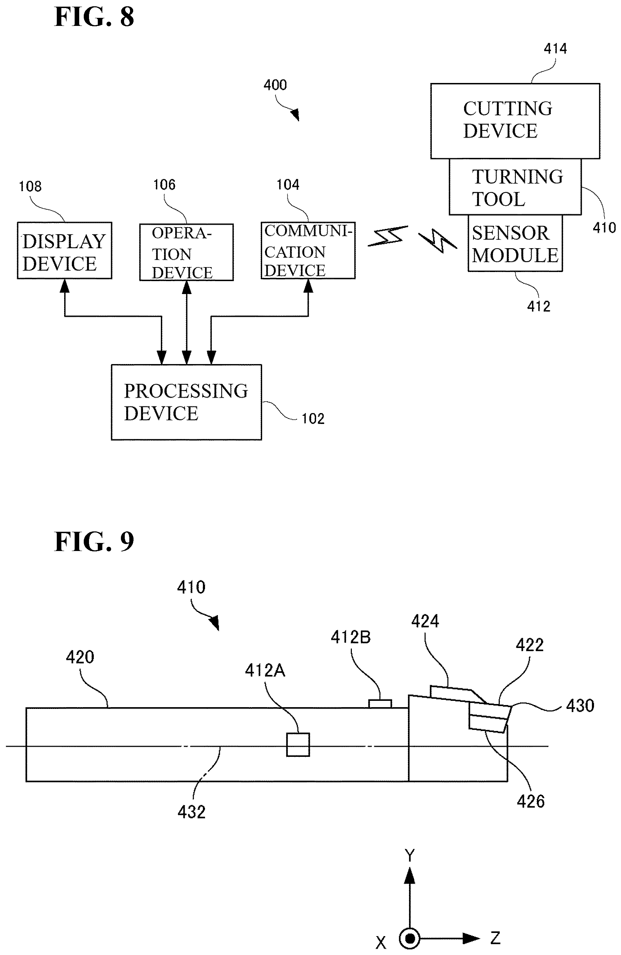

According to the first embodiment, the milling tool is used as the cutting tool. According to a second embodiment, a turning tool is used as the cutting tool. Referring to FIG. 8, a system 400 according to the second embodiment of the present disclosure includes the processing device 102, the communication device 104, the operation device 106, the display device 108, and a sensor module 412. The processing device 102, the communication device 104, the operation device 106, and the display device 108 have the functions similar to the functions of those included in the above-described system 100 (see FIG. 1). Thus, the duplicate description is avoided. However, the communication device 104 receives data transmitted from the sensor module 412 mounted on a turning tool 410. The turning tool 410 is mounted on a cutting device 414 and used for performing turning on a cutting object (not illustrated). The cutting device 414 includes a mechanism (not illustrated) configured to grasp the cutting object and rotates the cutting object about a predetermined axis and a mechanism configured to control delivery of the turning tool 410. A processing state of the turning tool 410 is reflected in a measured value obtained with the sensor module 412 (that is, an output value of a sensor).

### [Configuration of Turning Tool]

Referring to FIG. 9, the turning tool 410 includes a shank 420 and a plurality of sensor modules 412 (specifically, a sensor module 412A and a sensor module 412B). A cutting blade 422 is detachably attached to the shank 420 with a securing member 424 and a securing member 426. The turning tool 410 is a blade-replaceable cutting tool, that is, a throwaway cutting tool. A distal end portion 430 of the cutting blade 422 is brought into contact with a cutting object so as to perform turning on the cutting object. The shank 420 may have a cutting blade instead of allowing the cutting blade to be attached thereto. FIG. 9 illustrates the XYZ axes that are perpendicular to each other and set for the turning tool 410. A direction of a central axis 432 of the turning tool 410 is the Z axis, and a direction perpendicular to a side surface of the turning tool 410 is the X axis. In the cutting, the turning tool 410 is delivered toward the cutting object along the Z axis direction.

The sensor module 412A is disposed on a side surface of the shank 420, and the sensor module 412B is disposed on a top surface (upper surface) of the shank 420. Both of the sensor module 412A and the sensor module 412B are disposed in a central portion with respect to the width direction of the surfaces where the sensor module 412A and the sensor module 412B are disposed. FIG. 9 illustrates examples of the positions of the sensor module 412A and the sensor module 412B in the Z axis direction. The positions of the sensor module 412A and the sensor module 412B in the Z axis direction are arbitrary. The sensor module 412A and the sensor module 412B may be disposed at the same position in the Z axis direction. The sensor module 412A may be disposed closer to the cutting blade 422 than the sensor module 412B. It is assumed that the sensor module 412A and the sensor module 412B include sensors of the same type and have the same structure. Thus, when the sensor module 412A and the sensor module 412B are not distinguished from each other, the sensor module 412A and the sensor module 412B are referred to as the sensor module 412. The sensor module 412A may be disposed in a recess formed in the side surface of the shank 420, and the sensor module 412B may be disposed in a recess formed in the top surface of the shank 420. It is sufficient that the sensors respectively included in the sensor module 412A and the sensor module 412B be disposed on the side surface (including the recess) and the top surface (including the recess) of the turning tool 410. Portions of the sensor modules except for the sensors may be contained in a housing (not illustrated) disposed around the turning tool 410.

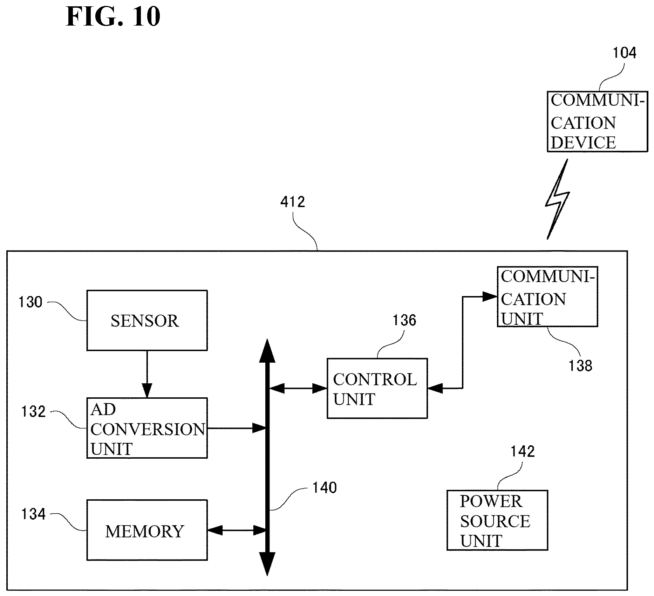

Referring to FIG. 10, as in the case with the sensor module 112 (see FIG. 3), the sensor module 412 includes the sensor 130, the AD conversion unit 132, the memory 134, the control unit 136, the communication unit 138, the bus 140, and the power source unit 142. The units included in the sensor module 412 have the functions similar to the functions of those of the sensor module 112 (see FIG. 3). Thus, the duplicate description is avoided. The sensor 130 is disposed at a position corresponding to the sensor module 412A or the sensor module 412B illustrated in FIG. 10. Here, the sensor 130 is a strain sensor. The sensor 130 may be a sensor other than the strain sensor. For example, the sensor 130 may be an acceleration sensor.

In the above description, a single sensor module includes a single sensor. However, this is not limiting. A single sensor module may include a plurality of sensor modules. For example, a single sensor module 412 may include two sensors disposed at positions respectively corresponding to the sensor module 412A and the sensor module 412B illustrated in FIG. 9. In this case, the sensor module 412 includes a total of two AD conversion units 132 which correspond to two sensors 130, respectively. Each AD conversion unit 132 samples the output value of a corresponding one of the sensors 130 to generate a digital output value and stores the digital output value in the memory 134 as time-series data. When the control unit 136 transmits the output values to the communication device 104 via the communication unit 138, each output value is transmitted so that the processing device 102 can identify which of the sensors has output the output value. For example, when an output value is transmitted, the control unit 136 may assign information identifying the sensor that has output this output value to this output value and transmit this output value with the information.

### [Configuration of Processing Device]

As described above, the processing device 102 illustrated in FIG. 8 is the same as the processing device 102 illustrated in FIG. 1. That is, the processing device 102 illustrated in FIG. 8 includes the control unit 160, the IF unit 162, the memory 164, and the bus 166 as illustrated in FIG. 4. Accordingly, the duplicate description is avoided. The memory 164 also stores information on the turning tool 410 and the processing conditions (for example, feeding speed and the like) for the cutting (that is, turning). The information on the turning tool 410 includes information such as the shape, the dimensions, the material (for example, a Poisson's ratio), the position of the cutting blade, and the positions where the sensor module 412A and the sensor module 412B are disposed.

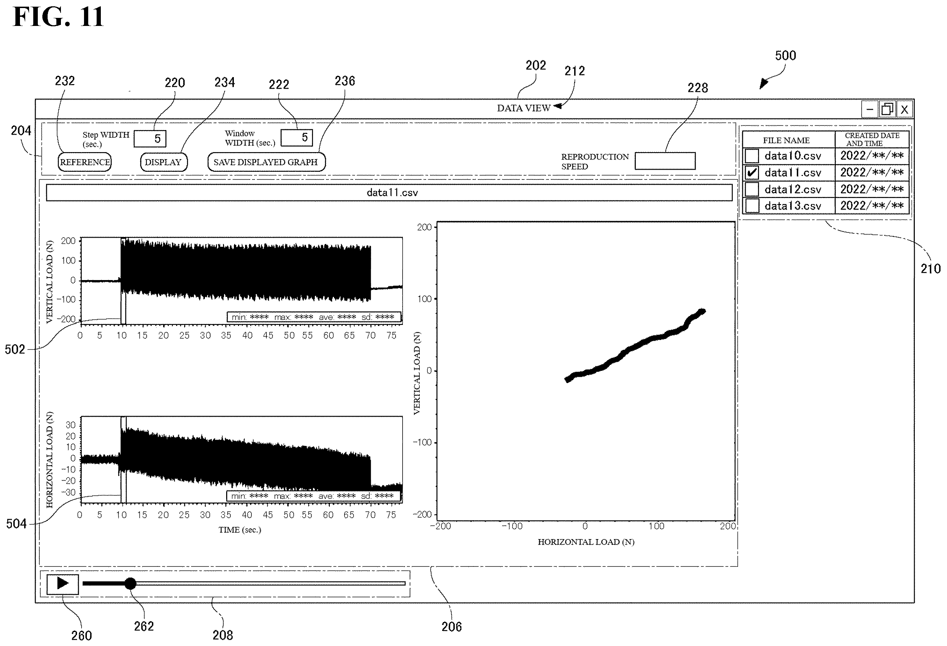

The control unit 160 reads the output value (that is, the strain value) of each of the sensor module 412A and the sensor module 412B stored in the memory 164 and calculates a load on the turning tool 410 (that is, cutting resistance) from the shape and the material (for example, the Poisson's ratio) of the turning tool 410 and the position where a corresponding one of the sensor module 412A and the sensor module 412B is disposed. The control unit 160 stores the components (the X component and the Y component) of the calculated load in the memory 164 as the time-series data. When an instruction is input due to the operation of the operation device 106, the control unit 160 reads the calculated results from the memory 164 and causes the display device 108 to display the calculated results, for example, as illustrated in FIG. 11.

### [Screen Display]

Referring to FIG. 11, a display screen 500 includes the region 202, the region 204, the region 206, the region 208, and the region 210 as in the case with the display screen 200 (see FIG. 5). Accordingly, the duplicate description is avoided. Mainly, the difference between the display screen 500 and the display screen 200 due to the difference in data to be displayed is described.

The calculated physical quantity related to the turning tool, that is, graphs representing the time-series data of the X component and the Y component of the load (respectively represented by a horizontal load and a vertical load) are represented in a left region of the region 206. In each of the graphs, the horizontal axis represents time (seconds). That is, an upper graph represents variation of the horizontal load and a lower graph represents variation of the vertical load. In each of the graphs, the unit in the vertical axis is newton (N). Items min, max, ave, and sd represented in a frame at the lower right of each graph respectively indicate a maximum value, a minimum value, an average value, and a standard deviation of each value of the physical quantity in a predetermined range of the graph (that is, a Window 502 and a Window 504).

A right region of the region 206 displays the distribution image related to data within the predetermined range represented in the graphs of the left region. That is, the distribution image is formed by plotting a plurality of pieces of data in the Window 502 and the Window 504 with the horizontal axis set as the horizontal load and the vertical axis set as the vertical load. The Window 504 has the same width as that of the Window 502 and is represented at the same position as that of the Window 502 on the time axis. As will be described later, the width of the Window 502 is variable. The data in the Window 502 and the Window 504 varies in accordance with the variation of the width of the Window 502 and the Window 504. Thus, a new distribution image is generated in response to the variation of the data and displayed in the display screen 500. Furthermore, the Window 502 is movable in the time axis direction by operating the operation device 106. Also, when the Window 502 and the Window 504 are moved, the data in the Window 502 and the Window 504 varies. Thus, a new distribution image is generated and displayed in the display screen 500 in accordance with the variation of the data. The shape of the Window 502 and the Window 504 is not limited to a rectangular shape. It is sufficient that the Window 502 and the Window 504 be visual information (that is, figures, colors, or the like) to represent the data used to generate the distribution image.

The region 204 includes the cell 220, the cell 222, the cell 228, the reference button 232, the display button 234, and the save displayed graph button 236. The cell 220 is provided to set the Step width, that is, the amount (in seconds) by which the Window 502 is moved. The cell 222 is provided to set the Window width, that is, the width (in seconds) of the Window 502. The Window 502 and the Window 504 move in accordance with a value set in the cell 220 (for example, T0 (seconds)), and as described above, a single distribution image is generated and displayed by using the data in the Window 502 and the Window 504.

The reproduction speed of animation is set or displayed in the cell 228. Each frame of the animation corresponds to a single distribution image. Accordingly, the animation reproduction speed can be calculated by 1/T0 (fps) as described above. The reproduction speed is set in the cell 228 by operating the operation device 106.

The reference button 232 is used for reading the data to be displayed in the region 206. When the reference button 232 is operated, a list including file names of a reading candidates is displayed in the region 210. The display button 234 is provided for instructing to read the data in a file selected in the list displayed in the region 210 and display the data in the region 206. The save displayed graph button 236 is provided for instructing to save of the graph displayed in the region 206. When the save displayed graph button 236 is operated, a screen (for example, a dialog box) for designating the name of a file to be saved and a saving location are displayed.

When the reference button 232 is operated as described above, the list of the file names including the data to be displayed in the region 206 is displayed in the region 210. FIG. 11 illustrates the following state: four files "data10.csv" to "data13.csv" are displayed in the list in the region 210; out of these files, the "data11.csv" is selected; the display button 234 is operated; and the data of the "data1.csv" is displayed in the region 206.

The region 208 includes the reproduction button 260 and the reproduction cursor 262. The reproduction button 260 starts animation display of the distribution image displayed in the region 206. The reproduction cursor 262 indicates the current reproduction position in a total reproduction time of the animation. The Window 502 and the Window 504 represented in the region 206 move in accordance with the reproduction of the animation of the distribution image. That is, the Window 502 is displayed at a position including the data used to generate the displayed distribution image in the upper graph, and the Window 504 is displayed at a position including the data used to generate the displayed distribution image in the lower graph.

When a graph representing time variation of the physical quantity related to the turning tool and a distribution image of the physical quantity are simultaneously displayed as described above, the state of the turning tool on which the sensor is mounted can be easily grasped during turning.

When an image in which the horizontal load and the vertical load of the load (that is, the cutting resistance) are plotted is displayed as the distribution image, the cutting resistance of the turning tool on which the sensor is mounted can be easily grasped during turning, and the processing state can be grasped from the shape of the distribution figure. For example, for intermittent processing, the distribution image is represented as a line, and for a continuous processing, the distribution image is represented as a point. Furthermore, the size (width) of the line of the distribution image varies in accordance with vibration, evaluation of vibration or the like is facilitated in a processing section.

In the above description, the horizontal load and the vertical load of the load (that is, cutting resistance) are plotted in the distribution image. However, this is not limiting. It is sufficient that, in the distribution image, two components of the physical quantity related to the turning tool represented by the vector be plotted.

As described above, the width of the Window 502 and the Window 504 can be set with the cell 222, and the Window 502 and the Window 504 can be moved along the time axis. Thus, the distribution image adequate for grasping the state of the turning tool on which the sensor is mounted can be generated, and the grasping of the state of the turning tool on which the sensor is mounted is facilitated.

As described above, when the reproduction button 260 is operated, the distribution image representing the distribution of the physical quantity calculated by the control unit 160 is refreshed while the Window 502 and the Window 504 are moved along the time axis of the graph. Thus, the time variation of the physical quantity related to the turning tool can be checked with animation of the distribution image. This can increase ease of grasping the state of the turning tool on which the sensor is mounted.

As described above, the moving amount of the Window 502 and the Window 504 at a time can be designated with the cell 220. This allows generation of the animation of the distribution image suitable for grasping the state of the turning tool on which the sensor is mounted.

As described above, with the cell 228, the reproduction speed of the animation, that is, the speed at which the distribution image is refreshed can be designated. This allows generation of the animation of the distribution image suitable for grasping the state of the turning tool on which the sensor is mounted.

### [Operation of Processing Device]

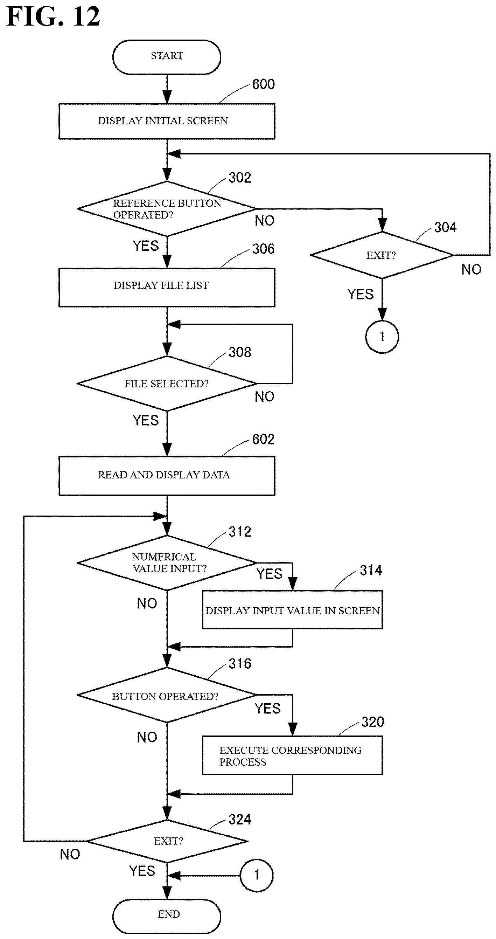

Referring to FIG. 12, operation of the processing device 102 is described. Processes illustrated in FIG. 12 are performed when, in response to input of the instruction to the processing device 102 due to operation of the operation device 106, the control unit 160 (see FIG. 4) reads a predetermined program from the memory 164 and executes the program. It is assumed that the physical quantity of the turning tool 410 is calculated by the control unit 160 from the output value of the sensor obtained during turning using the turning tool 410 performed by the cutting device 414, and stored in the memory 164 as the time-series data. A flowchart illustrated in FIG. 12 is made by changing the flowchart illustrated in FIG. 6 as follows: step 300 and step 310 are respectively replaced with step 600 and step 602; and step 318 and step 322 are deleted. Accordingly, the duplicate description is avoided, and description is mainly dedicated to different points.

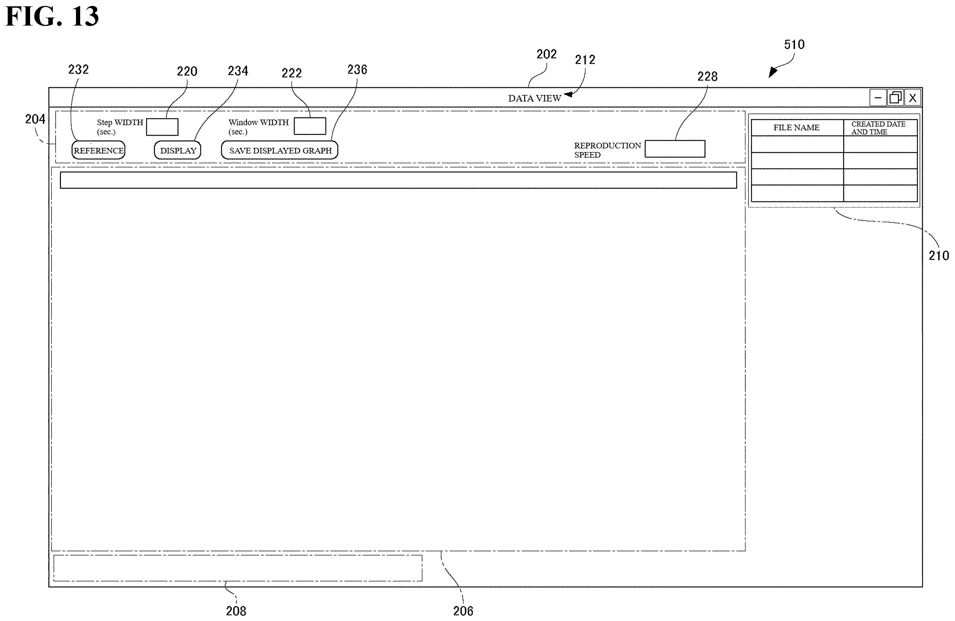

In step 600, the control unit 160 displays an initial screen in the display device 108. A display screen 510 being the initial screen illustrated in, for example, FIG. 13 is displayed in the display device 108. The display screen 510 corresponds to an image in a state before the reference button 232 is operated in the display screen 500 illustrated in FIG. 11.

In step 302, the control unit 160 determines whether the reference button 232 illustrated in the display screen 510 (see FIG. 13) is operated. When it is determined that the reference button 232 is operated, control moves to step 306. When it is not determined that the reference button 232 is operated, the control moves to step 304. Thus, step 302 and step 304 are repeatedly performed until the reference button 232 is operated or the instruction to exit is received.

When the operation button is operated, the control unit 160 displays the file list in the region 210 illustrated in FIG. 13 in step 306. The file list is displayed in the region 210 as illustrated in, for example, FIG. 11. After that, in step 308, the control unit 160 waits for selection of a file from the file list displayed in the region 210. When the file is selected, the control moves to step 602. The number of files selected from the file list displayed in the region 210 is not limited to one. A plurality of files may be selected from the displayed file list.

In step 602, the control unit 160 reads the data of the file selected in step 308 from the memory 164 and displays the read data in the display device 108. After that, the control moves to step 312. As a result, as illustrated in, for example, FIG. 11, graphs of the time-series data of turning and the distribution image are displayed in the region 206. The distribution image is generated by using, for example, the data in the Window for which the position and the Window width are set in the initial setting. When a plurality of files are selected, pieces of data of the files may be arranged in parallel, that is, may be displayed in different regions. Alternatively, the pieces of data of the plurality of files may be displayed so as to be superposed on each other, that is, may be displayed in the same region.

In step 312, the control unit 160 determines whether a numerical value is input. Specifically, the control unit 160 determines whether one of the cells 220, 222, and 228 is selected and a numerical value is input by operating the operation device 106. When it is determined that a numerical value is input, the control moves to step 314. In step 314, the control unit 160 displays the input value detected in step 312 in the corresponding cell. When it is not determined that a numerical value is input, the control moves to step 316. In step 316, the control unit 160 determines whether a button is operated. Specifically, the control unit 160 determines whether any one of the reference button 232, the display button 234, the save displayed graph button 236, and the reproduction button 260 is operated. When it is determined that any of these buttons is operated, the control moves to step 320. In step 320, the control unit 160 executes the process as described above corresponding to the button that is determined to have been operated in step 316. When none of these buttons is operated, the control moves to step 324, and the processes in and after step 312 is repeatedly performed until the instruction to exit is received.

Thus, in response to the operation with the operation device 106, the control unit 160 displays the display screen 500 as illustrated in FIG. 11 in the display device 108 and executes the process corresponding to the operation. Accordingly, by displaying the graph and the distribution image simultaneously, the state of the turning tool on which the sensor is mounted can be easily grasped during turning.

Each of the processes (each of the functions) according to the first embodiment and the second embodiment described above may be performed by processing circuitry including one or more of processors. In addition to the one or more processors described above, the processing circuitry may include, for example, an integrated circuit in which a subset of the following elements are combined with each other: one or more memories; various types of analog circuits; and various types of digital circuits. The one or more memories described above stores a program (instructions) that causes the one or more processors to execute the above-described processes. The one or more processors may execute the processes in accordance with the program read from the one or more memories or may execute the processes in accordance with a logic circuit designed in advance so as to execute the processes. The processors may be various types of processors adequate for controlling a computer such as the CPU, a graphics processing unit (GPU), a digital signal processor (DSP), a field programmable gate array (FPGA), and an application specific integrated circuit (ASIC).

Furthermore, a recording medium in which a program causing the computer to execute the processes of the processing device 102 (for example, the processes illustrated in FIG. 6 and FIG. 12) is recorded can be provided. Examples of the recording medium include, for example, an optical disc (such as a digital versatile disc (DVD)) and a removable semiconductor memory (such as a universal serial bus (USB) memory). The computer program can be sent through a line of communication, and the recording medium means nontemporary recording medium. When the program stored in the recording medium is loaded to the computer, the computer can, as described above, obtain the data of cutting to calculate the physical quantity (for example, cutting resistance) and enable the simultaneous display of the graph and the distribution image in the display device.

### (Appendix)

That is, a computer-readable nontemporary recording medium storing a computer program
that causes a computer to perform
a reception function configured to receive from a cutting tool an output value of a sensor mounted on the cutting tool,
a processing function configured to calculate a physical quantity related to the cutting tool from the output value received by the reception function, and
a displaying function configured to display an image including a graph representing time-series data of the physical quantity and a distribution image representing distribution of the physical quantity.

Although the present disclosure has been described by describing the embodiments, the above-described embodiments are exemplary, and the present disclosure is not limited only to the above-described embodiments. The scope of the present disclosure is presented by the claims with consideration for the description of detailed explanation of the invention and includes any changes within the meaning and range equal to the words described in the claims.

### REFERENCE SIGNS LIST

100, 400 system
102 processing device
104 communication device
106 operation device
108 display device
110 milling tool
112, 112A, 112B, 112C, 112D, 412, 412A, 412B sensor module
114, 414 cutting device
120 cutting portion
122, 422 cutting blade
130 sensor
132 AD conversion unit
134, 164 memory
136, 160 control unit
138 communication unit
140, 166 bus
142 power source unit
162 IF unit
200, 270, 500, 510 display screen
202, 204, 206, 208, 210 region
212 title
220, 222, 224, 226, 228 cell
230 mode selection button
232 reference button
234 display button
236 save displayed graph button
250, 252, 254, 502, 504 Window
260 reproduction button
262 reproduction cursor
300, 302, 304, 306, 308, 310, 312, 314, 316, 318, 320, 322, 324, 600, 602 step 410 turning tool
420 shank
424, 426 securing member
430 distal end portion
432 central axis
X, Y, Z axis

## Claims

1. A processing device comprising:
a reception unit configured to receive from a cutting tool an output value of a sensor mounted on the cutting tool;
a processing unit configured to calculate a physical quantity related to the cutting tool from the output value received by the reception unit; and
a display unit configured to display an image including a graph representing time-series data of the physical quantity and a distribution image representing distribution of the physical quantity.

2. The processing device according to claim 1,
wherein the sensor is a strain sensor,
wherein the output value is an output value of the sensor in cutting with the cutting tool,
wherein the processing unit calculates cutting resistance from the output value as the physical quantity,
wherein the display unit generates the distribution image by plotting, in a plane, two components of the cutting resistance calculated from the output value within a predetermined time, and
wherein the two components are components of the cutting resistance in two axial directions, respectively, the two axial directions intersecting each other in a plane perpendicular to a central axis of the cutting tool.

3. The processing device according to claim 2,
wherein the display unit displays a figure superposed on the graph and having a width corresponding to the predetermined time,
wherein the processing device further includes an operation unit for inputting an instruction to the display unit, and
wherein, in response to variation of at least one of the width and a position of the figure in the graph by operating the operation unit, the display unit generates the distribution image representing the distribution of the physical quantity superposed on the figure after the variation and displays the distribution image.

4. The processing device according to claim 3,
wherein, in response to input of an instruction to reproduce by using the operation unit, the display unit refreshes the distribution image representing the distribution of the physical quantity calculated by the processing unit while the figure is moved along a time axis of the graph.

5. The processing device according to claim 4,
wherein a moving amount of the figure at a single movement is specified by operating the operation unit.

6. The processing device according to claim 4 or 5,
wherein a speed at which the distribution image is refreshed is specified by operating the operation unit.

7. A processing method comprising:
receiving by a communication device from a cutting tool an output value of a sensor mounted on the cutting tool;
calculating by a processing device a physical quantity related to the cutting tool from the output value received by the communication device; and
displaying by a display device an image including a graph representing time-series data of the physical quantity and a distribution image representing distribution of the physical quantity.

8. A computer program configured to cause a computer to perform
a reception function receiving from a cutting tool an output value of a sensor mounted on the cutting tool,
a processing function calculating a physical quantity related to the cutting tool from the output value received by the reception function, and
a displaying function displaying an image including a graph representing time-series data of the physical quantity and a distribution image representing distribution of the physical quantity.

9. A system comprising:
a sensor mounted on a cutting tool; and
the processing device according to any one of claims 1 to 6,
wherein the cutting tool includes a communication unit configured to transmit an output value of the sensor to the processing device.
